(19) Europäisches Patentamt
European Patent Office
Office européen des brevets

(11) Veröffentlichungsnummer: **0 155 225 B1**

(12) **EUROPÄISCHE PATENTSCHRIFT**

(45) Veröffentlichungstag der Patentschrift: **05.06.91**

(51) Int. Cl.⁵ **G01N 22/00**

(21) Anmeldenummer: **85730027.1**

(22) Anmeldetag: **26.02.85**

(54) **Verfahren und Apparaturen zum Untersuchen von photoempfindlichen Materialien mittels Mikrowellen.**

(30) Priorität: **29.02.84 DE 3407850**

(43) Veröffentlichungstag der Anmeldung:
**18.09.85 Patentblatt 85/38**

(45) Bekanntmachung des Hinweises auf die
Patenterteilung:
**05.06.91 Patentblatt 91/23**

(84) Benannte Vertragsstaaten:
**AT BE CH DE FR GB IT LI LU NL SE**

(56) Entgegenhaltungen:
**US-A- 3 939 415**

**IEEE TRANSACTIONS ON ELECTRON DEVI-
CES, Band ED-27, Nr. 11, November 1980,
Seiten 2124-2127, New York, US; B. DRUGGE
et al.: "Laser scanning technique for the
detection of resistivity inhomogeneities in
silicon using liquid rectifying contacts"**

**IEEE TRANSACTIONS ON INSTRUMENTA-
TION AND MEASUREMENT, Band IM-32, Nr. 2,
Juni 1983, Seiten 326-331, New York, US; I.
SHIH et al.; "A technique for photoelectric
and photodielectric effect measurements at
microwave frequencies"**

(73) Patentinhaber: **Hahn-Meitner-Institut Berlin
Gesellschaft mit beschränkter Haftung
Glienicker Str. 100
W-1000 Berlin 39(DE)**

(72) Erfinder: **Tributsch, Helmut, Prof. Dr. rer. nat.
Alsenstrasse 24
W-1000 Berlin 39(DE)**
Erfinder: **Beck, Gerhard, Dr.-Ing.
Beskidenstrasse 54
W-1000 Berlin 38(DE)**
Erfinder: **Kunst, Marinus, Dr.-Ing.
Carmerstrasse 16
W-1000 Berlin 12(DE)**

(74) Vertreter: **Wolff, Konrad
Heinrich-Hertz-Institut für Nachrichtentechnik Berlin GmbH Einsteinufer 37
W-1000 Berlin 10(DE)**

## Beschreibung

Die Erfindung bezieht sich auf ein Verfahren und auf Apparaturen zum Untersuchen von photoempfindlichen Materialien, wobei durch Bestrahlen mit Photonen oder Elektronen ein Ladungsträgerüberschuß erzeugt und eine hiervon ableitbare charakteristische Veränderliche mittels angekoppelter Mikrowellen bestimmt wird. Die Apparaturen enthalten dementsprechend ein Hohlleitersystem, einschließlich Generator zur Erzeugung und Detektor zur Messung von Mikrowellen, eine Probenhalterung und ein Bestrahlungssystem zur Erzeugung von Ladungsträgern im photoempfindlichen Material sowie mehr oder weniger übliche Meßgeräte.

Als Einsatzmöglichkeiten der Erfindung kommen insbesondere kontaktlos und zerstörungsfrei auszuführende Messungen an und Prüfungen von Halbleiter-Schichten, -Bauelementen oder -Schaltkreisen in Betracht. Es sind beispielsweise zu nennen:

- Oberflächenstrukturbestimmung von polykristallinen photoempfindlichen Materialien. Die Überschußleitfähigkeit muß dazu örtlich aufgelöst gemessen werden und die Ortsabhängigkeit der Überschußleitfähigkeit kann zeigen: Korngrenzen (kleinere oder größere Überschußleitfähigkeit), Stufen in der Oberfläche (z.B. in Schichtgitterkristallen), chemisch unterschiedliche Zusammensetzung der Oberflächenschicht, Leiterbahn-Strukturfehler etc.
- Qualitätskontrolle von Photozellen. Abweichungen der Überschußleitfähigkeit an bestimmten Stellen auf der Oberfläche einer Photozelle können Herstellungsdefekte und Zerstörung des Materials zeigen.
- Qualitätskontrolle von mikroelektronischen Systemen, welche aus photoempfindlichen Halbleitern, Kunststoffen und Metallen aufgebaut sind (z.B. Halbleiter-Chips). Ein örtlich aufgelöstes Profil der Überschußleitfähigkeit eines Modellprodukts (Normprobe) wird verglichen mit einem Profil des zu prüfenden Produkts. Defekte und Zerstörungen sowie ihre Lokalisierung können aus diesem Vergleich bestimmt werden.

Diese Untersuchungen sollen sowohl ex-situ als auch gegebenenfalls in-situ erfolgen können.

Der Stand der Technik, von dem die Erfindung ausgeht, ist aus der US-A - 3 939 415 (Y. Terasawa) bekannt. Die dort offenbarten Maßnahmen erlauben, zerstörungsfrei die Homogenität einer Dotierung von PNP-Wafern zu untersuchen. Dazu werden in den Wafern durch ortsunabhängig auftreffende Licht- oder Elektronenstrahlen, also kontaktlos, Ladungsträger induziert. Deren Lebensdauer läßt sich dann aus der Messung der zeitlichen Änderung der Ladungsträgerkonzentration durch Anwendung von Mikrowellen bestimmen, die nur einen Teilbereich des Prüflings, ebenfalls kontaktlos, erfassen müssen. Das eigentliche Problem hierbei, Prüflinge mit verhältnismäßig großen Abmessungen an ein Mikrowellenfeld zu koppeln, hat dieser vorbekannte Stand der Technik durch eine spitz zulaufend ausgebildete Antenne gelöst, die es ermöglicht, ein abgestrahltes Mikrowellensignal auf einen repräsentativen Teilbereich des Meßobjekts gelangen zu lassen sowie das von dort reflektierte Mikrowellensignal zu empfangen. Die zu untersuchenden Bereiche können bis hinab zu etwa 0,005 mm$^2$ bis 0,1 mm$^2$ groß sein. Bei Kreisflächen entspricht dies einem Durchmesser von etwa 80 $\mu$m bis 367 $\mu$m, bei Quadraten einer Seitenlänge von 70 $\mu$m bis 316 $\mu$m.

Für ein Meßobjekt mit kleinen Abmessungen, die dessen Unterbringung innerhalb eines Rechteckhohlleiters zulassen, ist eine Möglichkeit zum Untersuchen mittels stehender Mikrowellen aus IEEE Transactions on Instrumentation and Measurement, Band IM-32, Juni 1983, Nr. 2, Seiten 326 bis 331 (I. Shih et al) bekannt. Die dabei zur Anwendung gelangenden Maßnahmen bestehen darin, eine Materialprobe mit im wesentlichen photoaktiven Eigenschaften zur Anregung von Ladungsträgern ortsunabhängig mit Licht zu bestrahlen und Änderungen eines von der Probe beeinflußten Mikrowellenfeldes zu messen und auszuwerten. Hierzu dient eine Mikrowellen-Brückenschaltung mit einer Mikrowellenleitung, die Fenster für die externe Bestrahlung des Prüflings aufweist. Es lassen sich Phase und Dämpfung zunächst ohne und sodann mit in der Probe angeregten Ladungsträgern bestimmen. Eine solche Methode ist für eine ortsauflösende Bestimmung einer Eigenschaft des Prüflings nicht geeignet, nicht zerstörungsfrei und nicht in-situ durchführbar.

Aus IEEE Transactions on Electron Devices, Band ED-27, Nr. 11, Nov. 1980, Seiten 2124 bis 2127 (B. Drugge et al) ist es bekannt, für eine charakteristische Eigenschaft eines Silizium-Wafers, z.B. den spezifischen Widerstand, die Schwankungen, örtlich aufgelöst mit einer als elektrolytische Zelle aufgebauten Meßanordnung unter hoher Vorspannung zu bestimmen. Es ist dazu vorgesehen, einen die Ladungsträger induzierenden Laserstrahl gerastert über das Meßobjekt zu führen. Die induzierten Photoströme fließen in der Meßanordnung über einen ohmschen Kontakt, der auf der Vorderseite des Prüflings anzubringen ist. Wenn auch eine ortsauflösende Untersuchung des Prüflings erfolgt, erfordert diese Methode jeweils nicht zerstörungsfrei durchführbare Kontaktierungen und die Einhaltung besonderer Randbedingungen, um zu erreichen, daß die zu untersuchende Eigenschaft des Halbleitermaterials die dominierende Größe für den meßbaren Photostrom darstellt.

Bei der vorliegenden Erfindung wie auch bei einem etwas älteren Vorschlag der Anmelderin (vgl. EP-A3 - 0 153 901 bzw. DE-A1 35 02 567), ist es jedoch von wesentlicher Bedeutung, daß bei den zu untersuchenden Materialien charakteristische Materialeigenschaften zerstörungsfrei bestimmt und zudem allein zu Meßzwecken nur dort, wo unbedingt nötig oder ohne weiteres möglich, Betriebsabläufe oder Herstellungsprozesse unterbrochen werden sollten.

Auf weitere Veröffentlichungen, die für das technische Gebiet der vorliegenden Erfindung von Bedeutung sind, wird nachfolgend kurz eingegangen:

- Journal of Applied Physics, Band 30, Nr. 7, Juli 1959, Seiten 1054 ff, insbesondere Seiten 1057/1058 (A.P. Ramsa et al): Es wird bereits die Tatsache ausgenutzt, daß in halbleitendem Material ein Ladungsträgerüberschuß z.B. durch Bestrahlen mit Licht erzeugt werden kann und sich die im Material induzierte Leitfähigkeit mittels Mikrowellen in dem Teil des Materiale messen läßt, der im Mikrowellenfeld deponiert ist.
- "Dielectric Materials and Applications", A.R. von Hippel, Wiley, New York, 1952; oder: "Messung dielektrischer Stoffeigenschaften", A. Rost, Akademie-Verlag Berlin, 1978: Jede Änderung der optischen Parameter (Dielektrizitätskonstante, Leitfähigkeit etc.) in einem Hohlleitersystem verursacht bei der Mikrowelle eine Dispersion oder eine Absorption oder beides. Die optischen Parameter eines Materials lassen sich aus den Änderungen des Mikrowellenfeldes unter dem Einfluß dieses Materials bestimmen.
- Phys. Rev., 89 (1953), Seiten 1152/1153 (T.S. Benedict et al): Aus Änderungen von Materialeigenschaften lassen sich mittels Mikrowellen in Halbleiterschichten deren Transporteigenschaften bestimmen.
- Radiat. Phys. Chem., 10 (1977), Seiten 353 ff (P.P. Infeita et al) oder: "Proceedings of the IEEE" (1963), Seiten 581 ff (H. Jacobs et al): Wenn die Überschußleitfähigkeit nur eine kleine Änderung der Reflexions- oder Absorptionskoeffizienten bewirkt, kann gezeigt werden, daß die relative Änderung der reflektierten und der absorbierten Mikrowellenleistungproportional zu dieser Überschußleitfähigkeit ist. Die Proportionalitätskonstante ist eine Funktion der Eigenschaften (optische Parameter und Abmessungen) des Materials ohne Bestrahlung und kann im allgemeinen ausgewertet werden, wenn Messungen über einen größeren Frequenzbereich oder bei Proben mit verschiedener Dicke möglich sind. Die Auswertung ist aber nicht notwendig, wenn nur relative Änderungen der Überschußleitfähigkeit verglichen werden und die übrigen Gleichgewichtseigenschaften (Eigenschaften ohne Bestrahlung) des Materials sich nicht oder nur wenig ändern. Die gemessene Überschußleitfähigkeit ist korrelierbar mit den Eigenschaften des untersuchten Materials in Photozellen.

Somit läßt sich bezüglich des allgemeinen Fachwissens zu dem für die Erfindung maßgeblichen Zeitpunkt zusammenfassen, daß für photoaktive/photoempfindliche Materialsysteme die Photosensibilität eine der wichtigsten Materialeigenschaften ist, die sich durch kontaktfreies Anregen von Ladungsträgern und deren Einfluß auf ein das Materialsystem umgebendes bzw. an dieses gekoppeltes Mikrowellenfeld ebenfalls kontaktfrei untersuchen läßt und Rückschlüsse auf die Qualität eines solchen Materialsystems erlaubt. Übliche Meßverfahren sind:

a) Messung der Änderung des Verhältnisses stehender Wellen unter Einfluß des Materials

b) Messung des Absorptionskoeffizienten des Materials

c) Messung des Reflexionskoeffizienten des Materials.

Die beiden unter b) und c) genannten Verfahren gestatten nur unter besonderen Bedingungen eine eindeutige Auswertung der optischen Parameter, wenn lediglich bei einer Frequenz gemessen wird. Im allgemeinen ist eine numerische Auswertung der Messungen in einem bestimmten Frequenzbereich notwendig.

Der Erfindung liegt die Aufgabenstellung zugrunde, mit optimal aufeinander abgestimmten präparativen und detektiven Maßnahmen zur Charakterisierung von Schichten, Bauelementen, Schaltkreisen und dgl. aus photoempfindlichen Materialien zerstörungs- und kontaktfrei an den Oberflächen derartiger, z.B. inhomogener Schichten mit hoher Auflösung, mikroskopisch feine Untersuchungen vorzunehmen, so daß z.B. Korngrenzen, chemisch unterschiedliche Zusammensetzungen, Herstellungsdefekte, Beschädigungen des Materials und dergleichen lokalisiert werden können.

Beim erfindungsgemäßen Verfahren besteht die Lösung hierfür darin, daß

- das zu untersuchende Material in einem Mikrowellenfeld positioniert wird;
- ein scharf fokussierter Photonen- bzw. Elektronenstrahl auf einen diskreten Bereich an der Oberfläche des zu untersuchenden Materials gerichtet und in diesem Teil des Materials ein Ladungsträgerüberschuß erzeugt wird,
- die dadurch in diesem Teil des Materials induzierte Leitfähigkeit mit Hilfe des angekoppelten Mikrowellenfeldes detektiert wird, und

- aus detektierten Änderungen, die sich durch Variieren der diskreten, bestrahlten Bereiche ergeben, mikrostrukturelle Unregelmäßigkeiten im untersuchten Material bestimmt werden.

Die scharf fokussierte Strahlung bewirkt, daß nur im bestrahlten Teil des Materials Ladungsträger erzeugt werden, und die gemessene Überschußleitfähigkeit ist nur kennzeichnend für den bestrahlten Ausschnitt. Materialien mit örtlich unterschiedlichen photoelektrischen Eigenschaften zeigen dann auch eine örtlich abhängige Mikrowellenabsorption und -reflexion. Ist das Mikrowellenfeld inhomogen, sollte die zusätzliche Mikrowellenabsorption oder -reflexion möglichst immer an derselben Stelle im Mikrowellenfeld stattfinden, wenn die Überschußleitfähigkeit an unterschiedlichen Stellen des Materials zu vergleichen ist, oder es muß ein entsprechender Korrekturparameter berücksichtigt werden.

Beim erfindungsgemäßen Verfahren erfolgt vorteilhaft die Fokussierung des Elektronen- oder Photonenstrahls auf einen Fleck mit ca. 0,1 $\mu$m bis 10 $\mu$m Durchmesser. Infolge von Diffusion im Material ergeben sich in der Auswirkung ohnehin Vergrößerungen des Bereichs induzierter Leitfähigkeit, so daß hierdurch einer vernünftigen Fokussierung natürliche Grenzen gesetzt sind.

Da relative Änderungen des Mikrowellenfeldes ausgewertet werden, muß beim erfindungsgemäßen Verfahren auch dafür gesorgt werden, daß entsprechend den gewünschten ortsauflösenden Messungen der Photonen- bzw. Elektronenstrahl und das Meßobjekt relativ zueinander positioniert werden können. Für in-situ-Messungen ist es vorteilhaft, das Meßobjekt ortsfest zu halten und den Elektronen- bzw. Photonenstrahl über die Oberfläche des an das Mikrowellenfeld gekoppelten Materials hinweg zu bewegen. Für ex-situ-Messungen kann hingegen das an das Mikrowellenfeld gekoppelte Material unter dem Elektronen-bzw. Photonenstrahl hinweg bewegt werden, so daß sich der jeweils bestrahlte Bereich des Materials bezüglich des Mikrowellenfeldes immer am selben Ort befindet, d.h. Unterschiede zwischen derartigen Oberflächenbereichen des Materials unabhängig von der Ausbildung des Mikrowellenfeldes im Hohlleiter bestimmt werden können. Beide Bewegungsarten lassen sich auch überlagern.

Die Relativbewegung zwischen Material und Strahl erfolgt bei Ausführungsformen der Erfindung bevorzugt schrittweise nach einem vorgegebenen Raster. Dadurch läßt sich ein für die Praxis ausreichend lückenloses Abbild der Oberflächenstruktur des Meßobjekts erzeugen. Die Schrittlänge der Relativbewegungsollte im $\mu$m-Bereich liegen. Hierdurch läßt sich eine Auflösung in der erforderlichen Höhe erreichen, wobei sowohl diese Schrittlängen als auch die Schärfe der Fokussierung des Elektronen- bzw. Photonenstrahls aufeinander abgestimmt sein müssen. Wird zudem ein Photonenstrahl von einen Laser erzeugt, der sich takten läßt, ermöglicht die pulsförmige Strahlung eine zeitaufgelöste Messung, d.h. insbesondere eine teilweise Eliminierung der Einflüsse, die infolge Diffusion von Ladungsträgern über den Bereich des eigentlichen Leuchtflecks auf dem Material hinaus mehr oder weniger stark auftreten.

Für erfindungsgemäße Meßapparaturen werden hauptsächlich herkömmliche, handelsübliche Komponenten benötigt. Hierzu zählen das Mikrowellensystem (Hohl- oder Streifenleitung) als solches mit den Geräten zur Erzeugung und Detektion von Mikrowellen. Da Mikrowellenabsorption oder -reflexion eines Materials, das mit Photonen oder Elektronen bestrahlt wird, gemessen werden sollen, enthalten diese Apparaturen auch eine entsprechende Strahlungsquelle. Die besonderen Ausbildungen der erfindungsgemäßen Meßapparaturen im Hinblick auf die Ausführbarkeit des oben erläuterten Verfahrens sind gekennzeichnet durch

- einen Probenhalter für plattenförmige Meßobjekte zu ihrer Positionierung im Mikrowellenfeld in einer Ebene mit beliebig wählbarem Winkel zur Ausbreitungsrichtung der Mikrowellen,
oder

- einen Probenhalter der plattenförmige, in einer Ebene senkrecht zur Ausbreitungsrichtung der Mikrowellen zu positionierende, den Hohlleiterquerschnitt überdeckende Meßobjekte aufnimmt,
sowie

- ein Strahllenkungssystem, das den von der Strahlungsquelle ausgehenden, mittels einer Fokussiereinrichtung scharf gebündelten Photonen- bzw. Elektronenstrahl auf einen diskreten Bereich an der Oberfläche des plattenförmigen Meßobjekts im Wirkungsbereich des Hohlleiterquerschnitts richtet,

wobei entweder mindestens der Probenhalter eine verschiebbare Positionierung des Meßobjekts oder mindestens das Strahllenkungssystem ein Schwenken des Photonen- bzw. Elektronenstrahls gestattet und Relativbewegungen zwischen Meßobjekt und Strahl ermöglicht werden.

Die erfindungsgemäßen Meßapparaturen unterscheiden sich im wesentlichen dadurch, daß einerseits die Positionierung des Meßobjekts außerhalb eines Hohlleiters, z.B. in kurzer Entfernung hinter einer Öffnung eines Hohlleiters, hinter einer Antenne, einem Mikrowellen-Linsensystem oder dergleichen, andererseits aber auch innerhalb des Hohlleitersystems, dort dann z.B. mit fest vorgegebener Richtung, zweckmäßig senkrecht zur Ausbreitungsrichtung, vorgesehen werden kann.

Für die konstruktive Ausbildung ist es für die einzelnen Anwendungen von wesentlicher Bedeutung, einen Probenhalter mit einer Tragplatte für das Meßobjekt, eine gelochte Tragplatte, eine Tragplatte aus Kunststoff, eine metallische Abdeckplatte am Probenhalter und/oder eine gelochte Abdeckplatte vor-zusehen. Eine gepulste Bestrahlung kann mittels eines taktbaren Verschlusses im Strahlengang zwischen Strahlungsquelle und Probenhalter oder auch mittels einer taktbaren Ansteuerung der Strahlenquelle erfolgen.

Weiterhin vorteilhaft sind für Ausführungsformen der erfindungsgemäßen Meßapparaturen z.B. ein Hohlleiter-Krümmer, an dem der Probenhalter angeordnet ist und der ein Bestrahlungsfenster aufweist. Dabei kann insbesondere ein Bestrahlungsfenster im Bereich der Normalprojektion des Mittelpunktes der Hohlleiterquerschnittsfläche, an der der Probenhalter angeordnet ist, auf die Außenwand des Hohlleiterkrümmers angebracht sein. Derartige Krümmer können vorteilhaft als 90°-Hohlleiterkrümmer ausgebildet sein. Läßt sich die gewünschte Relativbewegung zwischen Meßobjekt und Strahl allein durch einen beweglichen Probenhalter herbeiführen, der Strahl in seiner Richtung also festhalten - übrigens mit beliebigem, einmal gewähltem Einfallswinkel - ist es außerordentlich zweckmäßig, eine elektrisch steuerbare Verstelleinrichtung für den Probenhalter mit Stellwegen - in beiden Richtungen einer Ebene - im $\mu$m-Bereich vorzusehen. Eine rechnergestützte Steuereinrichtung für eine derartige Verstelleinrichtung, die Strahlungsquelle und das Strahllenkungssystem bietet außer dem Komfort für die Messungen und deren Auswertung die Gewähr für hohe und jederzeit wiederholbare Genauigkeit.

Die Funktionsweise der Erfindung, deren bevorzugte Ausführungsformen, insbesondere Einzelheiten im Zusammenhang mit der Meßapparatur, werden nachfolgend anhand der schematischen Darstellungen in der Zeichnung näher erläutert. Dabei zeigen:

Fig. 1:    ein Blockschaltbild der Mikrowellen-Meßapparatur;

Fig. 2 bis 4 :    drei Prinzipskizzen für unterschiedliche Strahlzuführungen zum Meßobjekt;

Fig. 5:    einen Probenhalter mit mehreren Einzelheiten;

Fig. 6:    ein vereinfachtes Schema einer Meßapparatur zur ortsaufgelösten Bestimmung von Struktur und Eigenschaften einer imhomogenen Halbleiterschicht mittels Mikrowellenabsorption;

Fig. 7:    eine Prinzipskizze eines Meßaufbaus;

Fig. 8:    ein Schaubild für ein mit der Apparatur gemäß Fig. 7 aufgenommenes Oberflächenprofil einer Halbleiterschicht mit unbeschädigter und

Fig. 9:    entsprechend Fig. 8, jedoch mit beschädigter Oberfläche.

Mithilfe der Mikrowellen-Meßapparatur können relative Änderungen der Mikrowellenabsorption oder -reflexion eines Halbleitermaterials, das mit Licht oder Elektronen bestrahlt wird, ermittelt werden. Sie besteht im wesentlichen aus drei Teilen:

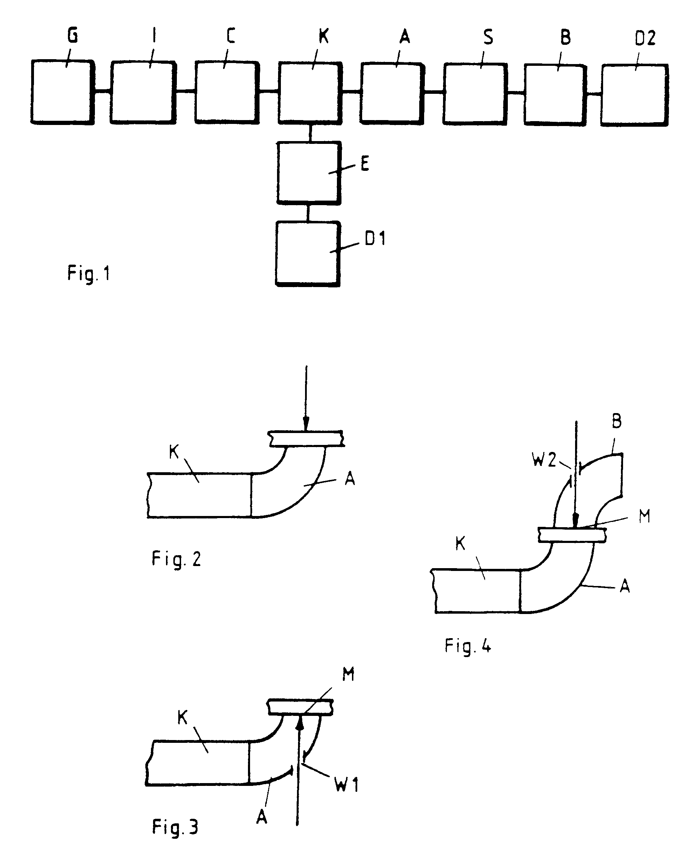

- dem Hohlleitersystem zur Erzeugung und Detektion der Mikrowellen, das in Fig. 1 als Blockschaltbild dargestellt ist und dort alle Komponenten enthält, die für unterschiedliche Verwendungszwecke benötigt werden,

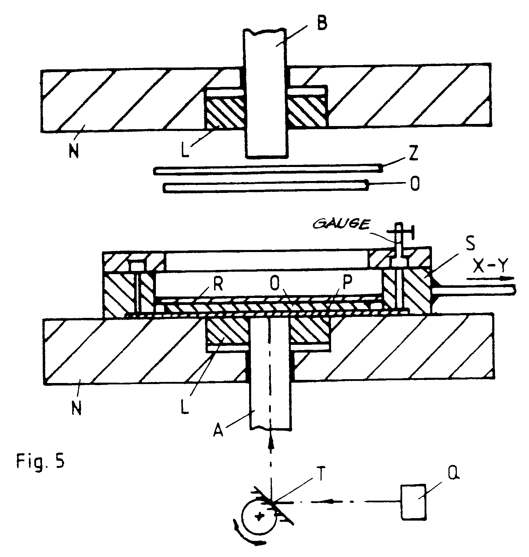

- dem Probenhalter (siehe insbesondere Fig. 5) und

- dem Bestrahlungssystem (siehe insbes. Fig. 2 bis 4).

Die Fig. 1 läßt folgendes erkennen:

Die Mikrowellen werden erzeugt vom Generator G, z.B. einer verstimmbaren Gunn-Diode oder von einem Klystron. Sie gelangen über einen Isolator I, einen Hohlleiter C, einen Zirkulator oder Richtungskoppler K und einen weiteren Hohlleiter A zum Probenhalter S. Die vom Meßobjekt im Probenhalter S reflektierten Mikrowellen gehen zurück zum Zirkulator (Richtungskoppler K), und die reflektierte Leistung gelangt über den Hohlleiter E zum Detektor D1 (Halbleiterdiode oder Thermistor) und wird dort gemessen. Für Transmissionsmessungen befindet sich hinter dem Probenhalter S noch ein Hohlleiter B mit einem Detektor D2, der die transmittierte Leistung mißt. Die Hohlleiter B und C sind nicht in jedem Fall notwendig und können unter gegebenen Umständen weggelassen werden.

Zur Induzierung einer Leitfähigkeit im Probenmaterial kann dieses von der einen oder anderen Seite mit Licht oder Elektronen bestahlt werden. In den Fig. 2, 3, 4 sind drei Variaten dargestellt. Dabei betreffen die Varianten gemäß Fig. 2 und 3 die Bestrahlung der Proben für Reflexionsmessungen. Die Proben, die jeweils den Hohlleiterquerschnitt ab- bzw. überdecken, können also von der dem Mikrowellenfeld abgekehrten- Fig. 2 - oder zugekehrten - Fig. 3 - Seite bestrahlt werden. Im Falle gemäß Fig. 2 kann der Hohlleiter natürlich auch gerade, d.h. er muß nicht als Krümmer A ausgebildet sein. Im Falle gemäß Fig. 3 ist im Krümmer A ein Bestrahlungsfenster W1 vorzusehen, durch das die Strahlung auf die Probenoberfläche gelangt. Soll die Strahlung senkrecht auftreffen, ist das Bestrahlungsfenster dementsprechend im Bereich der Normalprojektion des Mittelpunktes M der Hohlleiterquerschnittsfläche, die von der Probe abgedeckt wird, in der Außenwand des Krümmers A vorzusehen.

Für den Fall gemäß Fig. 4, der für Transmissionsmessungen gedacht ist, kann entweder auch eine Bestrahlung gemäß Fig. 3 erfolgen, wobei dann der Hohlleiter B nicht als Krümmer ausgebildet zu sein braucht. Die in Fig. 4 dargestellte Variante erfordert zwar nicht eine Ausbildung des Hohlleiters A, wohl aber des Hohlleiters B als Krümmer und ein Bestrahlungsfenster W2 entsprechend dem Krümmer A und dem dort vorzusehenden Bestrahlungsfenster W1, siehe Fig. 3. Die Probe bzw. der Probenhalter ist dann zwischen den Hohlleitern A und B fest positioniert, z.B. zwischengeschraubt.

Bezüglich der Probenhalterung S - siehe Fig. 5 - ist zu bemerken, daß Materialien, deren Eigenschaften hier gemessen werden können, im allgemeinen dünne Platten oder Schichten sind. Diese werden also auf die Querschnittsfläche des Hohlleiters A gelegt oder dort angedrückt. Wenn die Abmessungen des Meßobjekts kleiner sind als die der Hohlleiterquerschnittsfläche, kann es auf eine gegebenenfalls mit einem oder mehreren Löchern versehene Tragplatte P, z.B. aus Kunststoff, gelegt werden. Hinter der Probe kann sich zur Vergrößerung des Signals eine metallische Abdeckplatte R befinden. Auch diese kann mit einem oder mehreren Löchern versehen sein, was unbedingt notwendig ist, wenn die Überschußmikrowellentransmission gemessen wird oder wenn das Meßobjekt mit Licht oder Elektronen von einer Seite her bestrahlt wird, an der sich Metall befindet. Auch kann hinter der Probe eine Kunststoffplatte angebracht sein, die eventuell mit Löchern versehen ist.

Die Apparatur zur Messung der örtlichen Abhängigkeit der Überschußleitfähigkeit enthält insbesondere eine Vorrichtung, mit der die Probe über der Querschnittsfläche des Hohlleiters A verschiebbar ist. Das Ende des Hohlleiters A, dessen Querschnittsfläche z.B. für Reflexionsmessungen mit dem Meßobjekt/der Probe O abgedeckt wird, ist mittels eines Körpers L zur Lagesicherung axial verschiebbar in einer Tischplatte N gehalten. Der Probenhalter S kann beispielsweise aus einem zweiteiligen Rahmen gebildet sein, dessen Oberteil einen eingefrästen Kanal - Gauge - aufweist, der Vakuum bzw. Unterdruck führt. Im Unterteil sind Bohrungen angebracht, so daß eine Tragplatte P, gegebenenfalls auch unmittelbar ein plattenförmiges Meßobjekt O, am Probenhalter S haftet. Meßobjekte O mit kleineren Abmessungen werden auf die Tragplatte P gelegt und gegebenenfalls mit einer Platte R aus Metall abgedeckt.

Für Transmissionsmessungen kann oberhalb des Probenhalters S ein Hohlleiter B angeordnet sein, der ebenfalls mittels eines Körpers L zur Lagesicherung axial verschiebbar in einem Tisch N gehaltert ist. Nach Einbringen des Meßobjekts O in den Probenhalter S wird der Hohlleiter B mit seiner offenen Querschnittsfläche dicht an die Oberfläche des Meßobjekts O herangeführt. Gegebenenfalls wird hier dann - anstelle der Abdeckplatte R auf dem Meßobjekt O - eine Zwischenlage Z, z.B. ein Quarzplättchen mit 0,1 mm bis 1 mm, vorzugsweise 0,5 mm Dicke, eingelegt. Diese treten dann an die Stelle der bereits im Probenhalter S eingezeichneten Probe O und Abdeckplatte R.

Von einer Bestrahlungsquelle Q gelangt der scharf fokussierte Photonen- oder Elektronenstrahl über das Strahllenkungssystem T zum Meßobjekt O (s.a. Fig. 2, 3, 4). Der Probenhalter S ist über ein Gestänge mit einer Verstelleinrichtung X-Y verbunden, so daß die Probe O im Bereich der Querschnittsfläche des Hohlleiters A bzw. B hin- und herbewegt und an verschiedenen Stellen bestrahlt werden kann. Wegen der stark unterschiedlichen Verhältnisse im Mikrowellenfeld ist es günstiger, die örtliche Lage des jeweils bestrahlten Fleckes auf der Oberfläche der Probe O festzuhalten und das Meßobjekt über die Querschnittsfläche des Hohlleiters A bzw. B hinwegzubewegen. Zum Zweck der Justierung des Strahles sollte das Strahllenkungssystem T zumindest hierfür Schwenkbewegungen zulassen. Man kann jedoch auch auf diese Weise den bestrahlten Fleck über die Oberfläche des Meßobjekts O wandern lassen oder auch beide Bewegungen - die des Probenhalters S und die des Strahllenkungssystems T - überlagern.

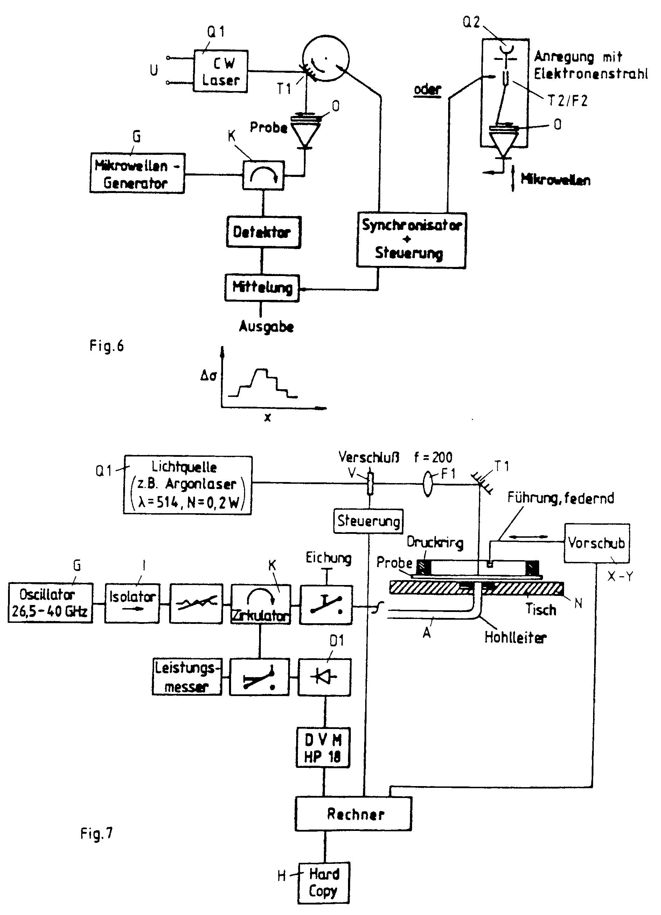

Die Fig. 6 und 7 zeigen schematisch und vereinfacht eine Mikrowellen-Meßapparatur bzw. einen Versuchsaufbau zur orts- bzw. zur orts-zeit-aufgelösten Bestimmung von Strukturen, Strukturfehlern und dergleichen von inhomogenen Halbleiterschichten. Aus Fig. 6 ist zu erkennen, daß zur Bestrahlung einer Probe O sowohl Photonen - CW-Laser als Strahlungsquelle Q1 und mechanisch-optisches Strahllenkungssystem T1 - als auch Elektronen - Elektronenstrahlröhre Q2 und elektromagnetisches System zur Strahlenkung T2 und Fokussierung F2 - eingesetzt werden können. Über einen Synchronisator und eine Steuerung werden die vom Detektor D1 als Reflexionen von Mikrowellen gemessenen und den betreffenden bestrahlten Bereichen der Proben O genau zugeordneten Werte gemittelt und z.B. dargestellt oder grafisch ausgegeben. Die Fig. 7 zeigt insbesondere einen Verschluß V im Strahlengang zwischen Photonenstrahlquelle Q1 und einer optischen Fokussiereinrichtung F1, der auch zeitaufgelöste Messungen ermöglicht. Weiterhin ist beispielsweise zwischen Isolator I und Zirkulator oder Richtungskoppler K ein Abschwächer für die Mikrowellenleistung vorgesehen, um Übersteuerungen des Detektors D1 vermeiden bzw. den jeweils günstigsten Bereich unterschiedlich empfindlicher Detektoren D1 einstellen zu können.

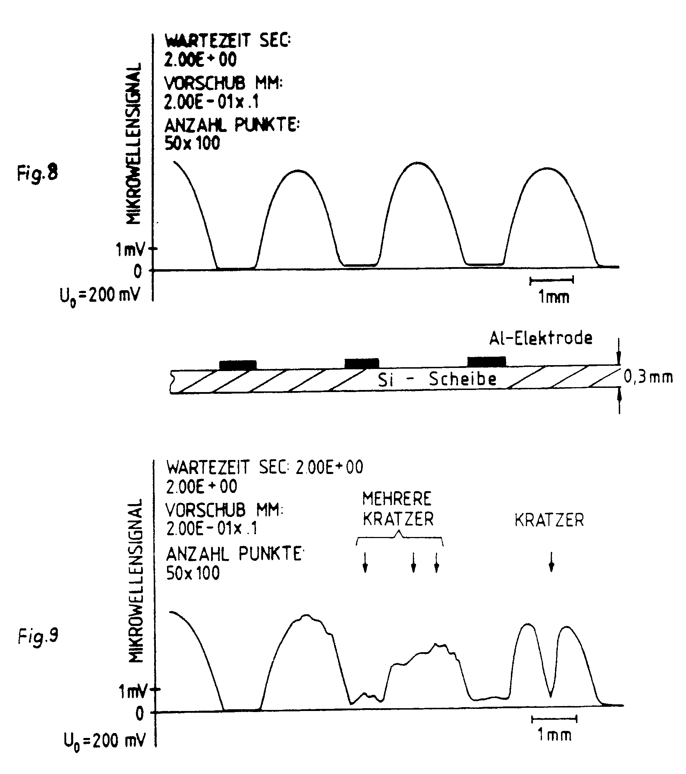

Die in Fig. 8 und 9 dargestellten Meßkurven wurden aufgenommen von Si-Halbleiterplättchen, 0,3 mm dick, mit einem Durchmesser von ca. 50 mm, d.h. ca. 2000 mm² Oberfläche, auf denen kreisförmige Al-Elektroden mit 1 mm Durchmesser aufgebracht waren. Das Mikrowellensignal zeigt an - Fig. 8 -, wo die Elektroden liegen, und - Fig. 9 -, wo die Oberfläche des Si und des Al - hier durch absichtlich angebrachte Kratzer - beschädigt ist.

Bei diesen Messungen wurde der Ort der bestrahlten Fläche bezüglich des Mikrowellenfeldes festgehalten, d.h. die Probe über der Hohlleiterquerschnittsfläche verschoben und die Strahlrichtung nicht verändert. Ausgewertet werden nur relative Änderungen der Mikrowellenreflexion bzw. -transmission infolge von zusätzlich angeregten Ladungsträgern im Probenmaterial im Bereich des bestrahlten Fleckes (ca. 0,1 $\mu$m bis 10 $\mu$m Durchmesser). Diese Ladungsträgerintensität ist abhängig von der Struktur der Probe bzw. deren Oberfläche, so daß z.B. mit X-Y-Verschiebungen im $\mu$m-Bereich eine genügend hohe Auflösung zur Bestimmung von Mikrostrukturen/ Strukturfehlern u. dgl. erzielbar ist. Für die Messungen und deren Auswertung kann ein Rechner eingesetzt werden. Ausführungsformen der Erfindung lassen sich auch als Mikrowellendetektionssystem in kommerziellen Rasterelektronenmikroskopen integrieren.

## Ansprüche

1. Verfahren zum kontaktlosen und zerstörungsfreien Untersuchen von photoempfindlichen Materialien, wobei durch Bestrahlen mit Photonen oder Elektronen ein Ladungsträgerüberschuß erzeugt und eine hiervon ableitbare charakteristische Veränderliche mittels angekoppelter Mikrowellen bestimmt wird,
dadurch gekennzeichnet, daß
   - das zu untersuchende Material in einem Mikrowellenfeld positioniert wird;
   - ein scharf fokussierter Photonen- bzw. Elektronenstrahl auf einen diskreten Bereich an der Oberfläche des zu untersuchenden Materials gerichtet und in diesem Teil des Materials ein Ladungsträgerüberschuß erzeugt wird,
   - die dadurch in diesem Teil des Materials induzierte Leitfähigkeit mit Hilfe des angekoppelten Mikrowellenfeldes detektiert wird, und
   - aus detektierten Änderungen, die sich durch Variieren der diskreten, bestrahlten Bereiche ergeben, mikrostrukturelle Unregelmäßigkeiten im untersuchten Material bestimmt werden.

2. Verfahren nach Anspruch 1,
dadurch gekennzeichnet, daß
der Elektronen- oder Photonenstrahl über die Oberfläche des Materials hinweg bewegt wird.

3. Verfahren nach Anspruch 1 oder 2,
dadurch gekennzeichnet, daß
das Material relativ zum Elektronen- oder Photonenstrahl hin und her bewegt wird.

4. Verfahren nach Anspruch 2 oder 3,
dadurch gekennzeichnet, daß
die Relativbewegung zwischen Material und Elektronen- oder Photonenstrahl schrittweise nach einem vorgegebenen Raster erfolgt.

5. Apparatur zum kontaktlosen und zerstörungsfreien Untersuchen von photoempfindlichen Materialien mittels Mikrowellen, mit einem Hohlleitersystem, einschließlich Generator zur Erzeugung und Detektor zur Messung von Mikrowellen, und einem Bestrahlungssystem zur Erzeugung von Ladungsträgern im photoempfindlichen Material,
gekennzeichnet durch
   - einen Probenhalter (S) für plattenförmige Meßobjekte zu ihrer Positionierung im Mikrowellenfeld in einer Ebene mit beliebig wählbarem Winkel zur Ausbreitungsrichtung der Mikrowellen, und
   - ein Strahllenkungssystem (T1, T2), das den von der Strahlungsquelle (Q1, Q2) ausgehenden, mittels einer Fokussiereinrichtung (F1, F2) scharf gebündelten Photonen- bzw. Elektronenstrahl auf einen diskreten Bereich an der Oberfläche des plattenförmigen Meßobjekts im Wirkungsbereich des Hohlleiterquerschnitts richtet,
wobei entweder mindestens der Probenhalter (S) eine verschiebbare Positionierung des Meßobjekts oder mindestens das Strahllenkungssystem (T1, T2) ein Schwenken des Photonen-bzw. Elektronenstrahls gestattet und Relativbewegungen zwischen Meßobjekt und Strahl ermöglicht werden.

6. Apparatur zum kontaktlosen und zerstörungsfreien Untersuchen von photoempfindlichen Materialien mittels Mikrowellen, mit einem Hohlleitersystem, einschließlich Generator zur Erzeugung und Detektor zur Messung von Mikrowellen, und einem Bestrahlungssystem zur Erzeugung von Ladungsträgern im photoempfindlichen Material,

**gekennzeichnet durch**

- einen Probenhalter (S) der plattenförmige, in einer Ebene senkrecht zur Ausbreitungsrichtung der Mikrowellen zu positionierende, den Hohlleiterquerschnitt überdeckende Meßobjekte aufnimmt, und
- ein Strahllenkungssystem (T1, T2), das den von der Strahlungsquelle (Q1, Q2) ausgehenden, mittels einer Fokussiereinrichtung (F1, F2) scharf gebündelten Photonen- bzw. Elektronenstrahl auf einen diskreten Bereich an der Oberfläche des plattenförmigen Meßobjekts im Wirkungsbereich des Hohlleiterquerschnitts richtet,

wobei entweder mindestens der Probenhalter (S) eine verschiebbare Positionierung des Meßobjekts oder mindestens das Strahllenkungssystem (T1, T2) ein Schwenken des Photonen-bzw. Elektronenstrahls gestattet und Relativbewegungen zwischen Meßobjekt und Strahl ermöglicht werden.

7. Apparatur nach Anspruch 5 oder 6,
**gekennzeichnet durch**
einen taktbaren Verschluß (V) im Strahlengang zwischen Strahlungsquelle (Q1) und Probenhalter (S).

8. Apparatur nach Anspruch 5 oder 6,
**gekennzeichnet durch**
eine taktbare Ansteuerung (U) der Strahlungsquelle (Q1, Q2).

9. Apparatur nach einem der Ansprüche 5 bis 8,
**gekennzeichnet durch**
einen Hohlleiter-Krümmer (A, B), an dem der Probenhalter (S) angeordnet ist, mit einem Bestrahlungsfenster (W1, W2).

10. Apparatur nach einem der Ansprüche 5 bis 9,
**gekennzeichnet durch**
eine elektrisch steuerbare Verstelleinrichtung (X-Y) für den Probenhalter (S) mit Stellwegen im $\mu$m-Bereich.

11. Apparatur nach einem der Ansprüche 5 bis 10,
**gekennzeichnet durch**
rechnergestützte Steuereinrichtungen für die Verstelleinrichtung (X-Y), die Strahlungsquelle (Q1, Q2) und das Strahllenkungssystem (T1, T2).

**Claims**

1. Method for contactless and non-destructive examination of photo-sensitive materials, in course of which by irradiation with photons or electrons a charge-carrier excess is generated and a characteristic variable being derivable from this is determined by using coupled microwaves,
characterized in that
- the material to be examined is positioned in a microwave field;
- a sharply focussed photon or electron beam is directed on to a discrete region on the surface of the material to be examined and in this part of the material a charge-carrier excess is generated;
- the conductivity induced in this way in this part of the material is detected with the aid of the coupled microwave field, and
- from detected changes, resulting from variations of the discrete irradiated regions, microstructural irregularities in the examined material are determined.

2. Method according to claim 1, characterized in that the electron or photon beam is scanned over the surface of the material.

3. Method according to claim 1 or 2,
characterized in that the material is moved to and fro relative to the electron or photon beam.

4. Method according to claim 2 or 3,
characterized in that the relative movement between material and electron or photon beam is performed stepwise according to a predetermined raster.

5. Apparatus for contactless and non-destructive examination of photo-sensitive materials by means of microwaves, having a waveguide system, including generator for the production of and detector for the measurement of microwaves, and an irradiation system for the generation of charge carriers in the photo-sensitive material, characterized by
- a sample holder (S) for plate-shaped test objects for their positioning in the microwave field in a plane with an angle which can be selected in any manner relative to the propagation direction of the microwaves, and
- a beam guiding system (T1, T2) which directs the photon or electron beam, emanating from the radiation source (Q1, Q2) and sharply focussed by means of a focussing device (F1, F2), on to a discrete region on the surface of the plate-shaped test object in the effective region of the waveguide cross section,
whereby either at least the sample holder (S) allows a displaceable positioning of the test object or at least the beam guiding system (T1, T2) allows a pivoting of the photon or electron beam and relative movements between test object and beam are made possible.

6. Apparatus for contactless and non-destructive examination of photo-sensitive materials by means of microwaves, having a waveguide system, including generator for the production of and detector for the measurement of microwaves, and an irradiation system for the generation of charge carriers in the photo-sensitive material, characterized by
   - a sample holder (S) for plate-shaped test objects to be positioned in a plane perpendicularly to the propagation direction of the microwaves and convering over the waveguide cross section, and
   - a beam guiding system (T1, T2) which directs the photon or electron beam, emanating from the radiation source (Q1, Q2) and sharply focussed by means of a focussing device (F1, F2), on to a discrete region on the surface of the plate-shaped test object in the effective region of the waveguide cross section,
   whereby either at least the sample holder (S) allows a displaceable positioning of the test object or at least the beam guiding system (T1, T2) allows a pivoting of the photon or electron beam and relative movements between test object and beam are made possible.

7. Apparatus according to claim 5 or 6, characterized by a shutter (V), capable of being timed, in the path of rays between radiation source (Q1) and sample holder (S).

8. Apparatus according to claim 5 or 6, characterized by a control (U) , capable of being timed, of the radiation source (Q1, Q2).

9. Apparatus according to one of claims 5 to 8, characterized by a waveguide bend (A, B), on which the sample holder (S) is arranged, having an irradiation window (W1, W2).

10. Apparatus according to one of claims 5 to 9, characterized by an electrically controllable adjusting device (X-Y) for the sample holder (S) with adjusting courses in the $\mu$m-region.

11. Apparatus according to one of claims 5 to 10, characterized by computer aided control devices for the adjusting device (X-Y), the radiation source (Q1, Q2) and the beam guiding system (T1, T2).

**Revendications**

1. Procédé d'examen sans contact et non-destructif de matériaux photosensibles, dans lequel un excédent de porteurs de charges est produit par une exposition aux photons ou aux électrons et une variable caractéristique pouvant en être déduite est déterminée à l'aide de micro-ondes couplées,
   caractérisé en ce que
   - le matériau à examiner est positionné dans un champ de micro-ondes;
   - un rayon de photons ou d'électrons fortement focalisé est dirigé sur une région discrète de la surface du matériau a examiner et un excédent de porteurs de charge est produit dans cette partie du matériau;
   - la conductibilité ainsi induite dans cette partie du matériau est détectée a l'aide du champ de micro-ondes couplé et
   - les changements détectés qui sont obtenues par la variation des régions discrètes irradiées déterminent les irrégularités microstructurelles du matériau examiné.

2. Procédé selon la revendication 1.
   caractérisé en ce que
   le rayon d'électrons ou de photons est déplacé sur la surface du matériau.

3. Procédé selon la revendication 1 ou 2.
   caractérisé en ce que
   le matériau est déplacé dans un mouvement de va-et-vient par rapport au rayon d'électrons ou de photons.

4. Procédé selon la revendication 2 ou 3.
   caractérisé en ce que
   le mouvement relatif entre le matériau et le rayon d'électrons ou de photons s'accomplit progressivement selon une grille donnée.

5. Appareil d'examen sans contact et non-destructif de matériaux photosensibles au moyen de micro-ondes avec un système de guide d'ondes comprenant un générateur de production et un détecteur de mesure de micro-ondes et un système d'irradiation pour la production de porteurs de charge dans le matériau photosensible,
   caractérisé par
   - un support d'échantillon (S) pour objets de mesure en forme de plaque en vue de leur positionnement dans le champ de micro-ondes dans un plan formant un angle au choix par rapport au sens de propagation des micro-ondes et
- un système de guidage du rayon (T1, T2) qui dirige 1e rayon de photons ou d'électrons, fortement concentré au moyen d'un dispositif de focalisation (F1, F2) et provenant de la source de rayonnement (Q1, Q2), sur une région discrète de la surface de l'objet de mesure en forme de plaque dans le champ d'action de la section du guide d'ondes,
sur lequel au moins le support d'échantillons (S) permet un positionnement mobile de l'objet de mesure ou bien au moins le système de guidage du rayon (T1, T2) permet un pivotement du rayon de photons ou d'électrons et autorise des mouvements relatifs entre l'objet de mesure et le rayon.

6. Appareil d'examen sans contact et non-destructif de matériaux photosensibles au moyen de micro-ondes avec un système de guide d'ondes comprenant un générateur de production et un détecteur de mesure de micro-ondes et un système d'irradiation pour la production de porteurs de charge dans le matériau photosensible,
caractérisé par
- un support d'échantillon (S) qui accueille les objets de mesure en forme de plaque couvrant la section du guide d'ondes et à positionner dans un plan perpendiculaire par rapport au sens de propagation des micro-ondes et
- un système de guidage du rayon (T1, T2) qui dirige le rayon de photons ou d'électrons, fortement concentré au moyen d'un dispositif de focalisation (F1, F2) et provenant de la source de rayonnement (Q1, Q2), sur une région discrète de la surface de l'objet de mesure en forme de plaque dans le champ d'action de la section du guide d'ondes,
sur lequel au moins le support d'échantillons (S) permet un positionnement mobile de l'objet de mesure ou bien au moins le système de guidage du rayon (T1, T2) permet un pivotement du rayon de photons ou d'électrons et autorise des mouvements relatifs entre l'objet de mesure et le rayon.

7. Appareil selon la revendication 5 ou 6, caractérisé par
un obturateur synchronisable (V) sur le trajet du rayon entre la source de rayonnement (Q1) et le support d'échantillons (S).

8. Appareil selon la revendication 5 ou 6, caractérisé par
une excitation synchronisable (U) de la source de rayonnement (Q1, Q2).

9. Appareil selon une des revendications 5 à 8, caractérisé par
un raccord coudé de guide d'ondes (A, B) sur lequel est disposé le support d'échantillons (S) avec une fenêtre d'exposition (W1, W2).

10. Appareil selon une des revendications 5 à 9, caractérisé par
un dispositif de réglage à commande électrique (X-Y) pour le support d'échantillons (S) avec des courses de réglage dans la gamme des $\mu$m.

11. Appareil selon une des revendications 5 à 10, caractérisé par
des dispositifs de commande assistés par ordinateur pour le dispositif de réglage (X-Y), la source de rayonnement (Q1, Q2) et le système de guidage du rayon (T1, T2).

G    I    C    K    A    S    B    D2

E

D1

Fig.1

Fig.2

Fig.4

Fig.3

Fig. 5

Fig.6

Fig.7

Fig.8

Fig.9